Europäisches Patentamt

European Patent Office

Office européen des brevets

(11) Publication number: **0 027 058**
A1

# EUROPEAN PATENT APPLICATION

(21) Application number: 80303565.8

(22) Date of filing: 09.10.80

(51) Int. Cl.³: **G 06 F 3/02**
// G06K7/08, G07C11/00

(30) Priority: 09.10.79 GB 7935020
01.07.80 GB 8021511
16.09.80 GB 8029815

(43) Date of publication of application: 15.04.81
Bulletin 81/15

(84) Designated Contracting States: BE CH DE FR IT LI NL
SE

(71) Applicant: **MASTIFF SECURITY SYSTEMS LIMITED,
Randalls Road, Leatherhead, Surrey KT22 7RX (GB)**

(72) Inventor: **Da Costa Porter, Reginald Neville, Old Pound
Cottage Chertsey Road, Chobham, Surrey (GB)**
Inventor: **Taylor, Derek Reginald, 24, Beckenshaw
Gardens, Woodmansterne Banstead, Surrey (GB)**

(74) Representative: **Arthur, George Fitzgerald et al,
KILBURN & STRODE 30, John Street, London WC1N 2DD
(GB)**

(54) **Computer system.**

(57) A main frame computer (31) is coupled to a computer
terminal (11 or 32) through data and address buses (12, 38,
39). The terminal (32) includes control electronics (16) cou-
pled to a display (at 14) and to a keyboard (at 13) and also
coupled with a detector (21) whether a coded signal is being
received at (18) from a hands-free token (33) carried by the
terminal operator. If the signals are being received at (18)
then the terminal (11) is operable, either because it receives
its power supply (at 15), or it is not latched out, or because it
is interrogated by the computer (31) and gives an appropri-
ate response.

.1.

COMPUTER SYSTEM

·This invention relates generally to the protection of computer systems from fraudulent use. A typical computer system has a main frame computer coupled to a computer terminal, or some other peripheral device, such as a cheque reader, coupled to the main frame computer through a data bus and an address bus. The peripheral device can be used by someone remote from the main frame computer for addressing the computer, and feeding input to it, and extracting information from it.

An object of the present invention is to provide some protection of such a system against operation of the terminal or peripheral device by an unauthorised person.

In accordance with one aspect of the present invention, a computer terminal or other peripheral device has a receiver and a detector capable of detecting whether the receiver is receiving a coded signal, and means for controlling the operation of the device in dependence on whether a coded signal is being received.

The·coded signal may be provided by a pocket token suitable for hands-free operation, that is to say capable of delivering a coded signal to the receiver, even when in the pocket or the handbag of a user provided the user is adjacent the peripheral device.

The preferred tokens are conveniently the tokens described in British Patent Specification No. 1414119.and British Patent Specification No. 1414120. Those Patent Specifications describe the use of tokens for controlling access to a secured area, and they are equally applicable to protection of a computer terminal as described above. However, other sorts of coded signal generating tokens can be used. The important thing is that the token should be capable of releasing the latch when in the pocket of the operator· so that the operator does not need to use his hands to unlock the terminal before starting to operate it. Operation will be available automatically provided the operator arrives carrying the appropriate token.

It can be arranged that the peripheral device has a latch which normally prevents operation but which can be released if the coded signal is being received. Again it can be arranged that if the coded signal is not being received, the power supply to the peripheral device is cut off. Again the detector can be arranged to set the peripheral device if coded signals are being received, so that the peripheral device can respond to an interrogation from the main frame computer by delivering a signal which the main frame computer can interpret as showing that the coded signal is being received.

It may be useful in some circumstances to have a detector of a presence at the peripheral device, for example a photoelectric device, or an infra-red device, which is arranged to give a signal responsive to the presence of a person at the peripheral device for rendering the peripheral device in-operative unless coded signals are also being received.

In an alternative method of protecting a computer system, the bus between a main frame computer and a peripheral device includes an integrity protection unit which normally passes signals in either direction, but which can be programmed so that certain signals can only be passed at pre-programmed times or perhaps can only be arranged to pass certain signals if they are passing in one direction rather than the other.

The invention may be carried into practice in various ways, and certain embodiments will now be described by way of example with reference to the accompanying drawings in which ;

FIGURE 1 is a diagram of a single computer protection system;

FIGURE 2 is a diagram of a multiple terminal system;

FIGURE 3 is a diagram of a system similar to FIGURE 1, but with a body sensing feature;

FIGURE 4 is a diagram of an arrangement enabling a computer terminal to be interrogated by a main frame computer before the main frame computer responds to operation of the terminal; and

FIGURE 5 is a diagram of a system for protecting a computer system by means of an integrity protection unit.

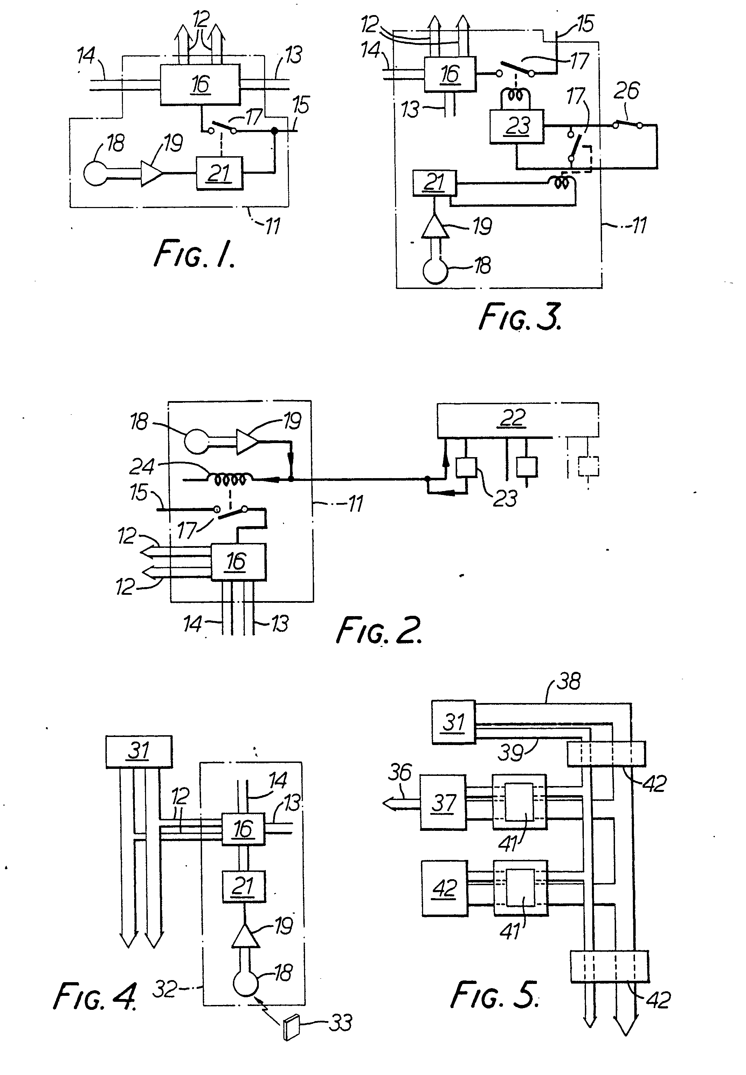

In the arrangement in FIGURE 1, a computer terminal 11 is connected by lines 12 to a computer, through lines 13 to a keyboard, through lines 14 to a visual display unit, and through a line 15 to an electrical supply. The terminal contains control electronics indicated generally at 16, and connected to the line 15 through a normally open relay contact 17. A pick-up aerial 18 which is shown as positioned within the terminal, but may be external, is capable of picking up signals generated by a token in the pocket of a user, and those signals are amplified at 19 and fed to a detector 21 powered from the supply at 15 and capable of detecting whether particular signals are being picked up at 18. If so, the detector 21 is arranged to hold the contacts 17 closed, so that the control electronics 16 can be energised from the supply.

This provides a simple arrangement whereby unless a keyboard operator has a token generating the appropriate coded signals, the control electronics 16 are not energised and operation of the keyboard is ineffective.

FIGURE 2 shows a modification of the arrangement of FIGURE 1, suitable for use where there are a number of terminals 11, and where it is desired that a terminal can be operated if the operator is carrying any one of a number of differently coded tokens. In this case, the output from each amplifier 19 is connected to a different input of a multiple code detector 22 which is arranged, if it detects that one of the appropriate coded signals is present, to supply through a delay unit 23 a signal to operate a relay 24 controlling the normally-open contact 17. The delay may, for example, be adjustable in one minutes steps to be anything between 1 and 5 minutes.

Either of the arrangements of FIGURES 1 and 2 may be used in conjunction with a body sensor, as indicated in FIGURE 3. The body sensor, may for example, be a passibe infra-red detector positioned on the terminal to respond to infra-red radiation from a body in a position to operate the keyboard. However, it could equally well be a photo-electric beam detector or a pressure mat, or a radar detector. Whichever body sensor is used, it can be arranged that a normally-closed contact 26 is held open as long as a body is being sensed. The contact 26 is connected in parallel with the normally-open contact 17 which is closed when an appropriate signal is picked up at 18. In this case the relay 24 is operated from a timer 23 which is arranged to open the contacts 17 if a body is being sensed but no appropriate signal is being picked up, that is if both contacts 26 and 27 are open, for longer than a short delay time. The delay time will allow the authorised user to leave the terminal temporarily without operating the relay 24. The timer 23 may in addition to, or instead of, operating the switch 17, operate an alarm.

The arrangement of FIGURE 4 has the feature that a main frame computer 31 can interrogate a terminal 32 and will only respond to instructions from the terminal if the interrogation reveals that a token 33 is present at the terminal. Thus, the terminal has an aerial 18 as already described, and an amplifier 19 and a detector 21. The difference is that the detector 21 is coupled to the control electronics 16 through interrogation lines 34. It is then not necessary to have a latch or means for cutting off the power supply to the terminal because the main frame computer can be programmed so that as soon as there is any attempt to communicate with the computer 31 from the terminal 32, the computer 31 interrogates the terminal before responding to instructions. The interrogation lines 34 are coupled to the electronics 16 so that if a token 33 is present at 18, then the electronics will be set perhaps by the closing of a switch, or by the setting up of an appropriate code, or in some other way to be able to respond to the interrogation from the main frame computer 31, over lines 12.

It is possible to address a main computer 31 from a terminal, or other peripheral device, by way of Post Office lines 36, as shown in FIGURE 5, provided a modem 37, that is a device capable of modulating and demodulating coded signals, is included between the address and data buses 38 and 39 from the main computer, and the Post Office line 36. However it may be possible to feed input to, or extract information from, the main computer fraudulently by someone who has, or can get access to a terminal connected to a Post Office line, and who knows the appropriate codes to be used by peripheral devices in addressing the main computer.

In order to reduce the danger of such fraudulent use of the system, a computer integrity protection unit 41 can be connected in the buses 38 and 39 leading to the modem 37, and the unit 41 is then programmed to allow signals to pass only in accordance with certain conditions. For example, the unit 41 might be programmed so that it will not pass a signal for erasing information from the main computer if that signal is passing in the direction from the Post Office line to the main computer. Normally it is required that information can be erased from the main computer only in response to instructions generated at the main computer, and not received externally.

Alternatively the unit 41 may be programmed so that it will only pass information from a peripheral device for entering information in the main computer if the information is passed at a certain time, which will be a time when authorised people know that that type of information can be fed to the main computer. Anybody fraudulently trying to feed such information to the main computer at other times will not be able to pass the unit 41. Such a computer integrity protection unit 41 can be included in series in the data and address buses leading to a peripheral device 42, other than by way of a modem and Post Office line, and the unit 41 can be programmed in a similar manner to that already described.

The portable token referred to at 33 will generally be one that can be carried in the pocket or the handbag of an authorised terminal operator being capable of transmitting coded signals to the receiver 18 without the token being taken out of the pocket or handbag, provided it is close to the terminal.

Such a token could have its own source of power to be capable of transmitting the coded signals continuously throughout the day, or to be capable of being switched on by a radio signal from the computer terminal when the authorised person approaches the terminals, so that power from the battery in the token will not be consumed when the person is not at the computer terminal.

CLAIMS

1.     A computer  terminal or other peripheral
device for a computer system, having a receiver and
a detector capable of  detecting whether the receiver
is receiving a coded signal, and means for controlling
the operation of the device in dependence on whether
a coded signal·is being received.

2.     ,A device as claimed in Claim 1 in
combination with a pocket token suitable for hands-
free operation for delivering the coded signal.

3.     A device as claimed in Claim 1 or Claim 2
having a latch which normally prevents operation
but which can be released if the coded signal is
being received.

4.     A device as claimed in Claim 1 or Claim 2
arranged to have the power supply cut off if the
coded signal is not being received.

5.     A device as claimed in Claim 1 or Claim 2
arranged to be set if coded signals are being
received so that the device can respond to an
interrogation from a main frame computer by
delivering a signal that the coded signal is being
received.

6.     A device as claimed in any of the preceding
claims including a detector of the presence of

.10

an individual at the peripheral device arranged to give a signal for rendering the device inoperative unless coded signals are also being received.

7. A device as claimed in any preceding claim including a settable delay unit for delaying the control of the device for a set time following loss of a coded signal.

8. A computer terminal or other computer peripheral device arranged substantially as herein specifically described with reference to any figure of the accompanying drawings.

9. A device as claimed in any of the preceding claims in a computer system in which the bus between a main frame computer and a peripheral device includes an integrity protection unit which normally passes signals in either direction, but which can be programmed so that certain signals can only pass in accordance with a programme.

FIG. I.

FIG. 3.

FIG. 2.

FIG. 4.

FIG. 5.

| Category | Citation of document with indication, where appropriate, of relevant passages | Relevant to claim |
|---|---|---|
| D | GB - A - 1 414 120 (LEWIS SECURITY SYSTEMS)<br><br>* Page 1, line 71 - page 2, line 105 *<br><br>-- | 1-3,6 |
| D | FR - A - 2 159 362 (LEWIS SECURITY SYSTEMS)<br><br>* Figure 1; page 3, line 29 - page 4, page 37 *<br><br>& GB - A - 1 414 119<br><br>-- | 1-3,6 |
| | PROCEEDINGS OF THE EASTERN JOINT COMPUTER CONFERENCE, vol. 20, 12th-14th December 1961, AFIPS Publication 1962, pages 166-173 New York, U.S.A.<br>P.B. LAZOVICK et al.: "A Versatile Man-Machine Communication Console"<br><br>* Page 168, right-hand column, paragraph 3 *<br><br>-- | 1 |
| | US - A - 3 643 219 (RAYTHEON)<br><br>* Figure 1; column 1, lines 27-37; column 2, line 39 - column 3, line 62 *<br><br>-- | 1 |
| | US - A - 3 508 205 (COMPUTER USAGE)<br><br>* Figure 1; column 2, lines 19-70 *<br><br>-- | 1,9 |
| A | US - A - 3 806 874 (GRETAG) | 1 |
| A | DE - A - 2 033 796 (OMRON TATEISI)<br>---- | 1 |

**CLASSIFICATION OF THE APPLICATION (Int. Cl.³)**

G 06 F 3/02//
G 06 K 7/08
G 07 C 11/00

**TECHNICAL FIELDS SEARCHED (Int. Cl.³)**

G 06 F 3/02
G 06 K 7/08
G 06 K 19/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 17-12-1980 | FORLEN |

EPO Form 1503.1  06.78